(19) Europäisches Patentamt
European Patent Office
Office européen des brevets

(11) Veröffentlichungsnummer: **0 221 338**
**A1**

(12) **EUROPÄISCHE PATENTANMELDUNG**

(21) Anmeldenummer: 86113390.8

(22) Anmeldetag: 29.09.86

(51) Int. Cl.⁴: **C 08 L 67/02**
C 08 K 3/36

(30) Priorität: 09.10.85 DE 3535985

(43) Veröffentlichungstag der Anmeldung:
13.05.87 Patentblatt 87/20

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Zabrocki, Karl, Dr.
Edelfalter 33
D-4044 Büttgen(DE)

(72) Erfinder: Reinking, Klaus, Dr.
Robert-Stolz-Strasse 16 b
D-5632 Wermelskirchen(DE)

(72) Erfinder: Köhler, Karl-Heinz, Dr.
Buschstrasse 165
D-4150 Krefeld(DE)

(72) Erfinder: Lange, Ralf, Dr.
Bethelstrasse 19
D-4150 Krefeld 1(DE)

(54) **Mineralgefüllte thermoplastische Polyester, Verfahren zu ihrer Herstellung und ihre Verwendung als Formmassen.**

(57) Durch Zusatz von gemahlenem Quarz und/oder gemahlenem Cristobalit zur thermoplastischen Polyestern lassen sich Mischungen erhalten, welche die typischen Vorteile mineralgefüllter Polyester besitzen, ohne daß ein Zähigkeitsverlust eintritt.

EP 0 221 338 A1

Croydon Printing Company Ltd.

BAYER AKTIENGESELLSCHAFT
Konzernverwaltung RP
Patentabteilung

5090 Leverkusen, Bayerwerk

Pv/m-c

# Mineralgefüllte thermoplastische Polyester, Verfahren zu ihrer Herstellung und ihre Verwendung als Formmassen

Die Erfindung betrifft thermoplastisch verarbeitbare Polyester, die gemahlenen Quarz und/oder gemahlenen Crystobalit als Füllstoff enthalten, ein Verfahren zu ihrer Herstellung und ihre Verwendung als Formmassen, vornehmlich für den Spritzguß.

Mit nicht faserförmigen Mineralien gefüllte thermoplastische Polyester sind als Werkstoffe in den Bereichen Elektrotechnik und Elektronik sowie im Fahrzeugbau zur Herstellung verschiedenster Formteile im Einsatz. Hauptvorteil derartiger Werkstoffe sind ihre hohe chemische und thermische Beständigkeit sowie die leichte Verarbeitbarkeit z.B. im Spritzgußverfahren.

Gegenüber ungefüllten und mit faserförmigen anorganischen Füllstoffen, z.B. Glasfasern, ausgerüsteten Polyestern zeichnen sich mineralgefüllte Polyester durch hervorragenden Oberflächenglanz, hohe Kriechstrom- und Lichtbogenfestigkeit sowie geringen Verzug beim Erstarren des Formteils aus.

Als nicht faserförmige mineralische Füllstoffe wurden schon die unterschiedlichsten Materialien verwendet, beispielsweise Talk (DE-OS 20 51 331, 20 51 333), Dolomit (EP-A 57 161), Novaculit (US-PS 37 40 341, 37 45 140, 40 18 738), Kaolin, Glimmer, Aluminiumoxid, Silicagel (JP-PS 15 191/69).

Den genannten Vorteilen, die mineralgefüllte Polyester mit sich bringen, steht der Nachteil des Zähigkeitsverlusts gegenüber. Durch Verwendung möglichst feinteiliger Füllstoffe kann man zwar versuchen, diesen Effekt möglichst gering zu halten; vermeiden ließ er sich bis jetzt jedoch noch nicht.

In der US-PS 37 40 371 wird erklärt, weshalb Novaculitgefüllte Polyester bessere mechanische Eigenschaften als mit anderen Mineralien gefüllte Polyester besitzen: Erstens erlaubt die hydrophile Oberfläche einen festeren Verbund zwischen Füllstoff und Polyester; zweitens werden durch die Abwesenheit scharfer Kanten beim kryptokristallinen Novaculit Spannungsspitzen an der Grenzfläche Füllstoff/Polyester vermieden. Dies ist aber bei der spröden Natur teilkristalliner Polyester besonders wichtig.

Es wurde nun überraschenderweise gefunden, daß man Polyester erhält, welche die Vorteile mineralgefüllter Polyester besitzen, ohne daß ein Zähigkeitsverlust eintritt, wenn man als Füllstoff gemahlenen Quarz und/oder gemahlenen Cristobalit einsetzt, dessen bzw. deren Teilchendurchmesser einen bestimmten Wert nicht überschreitet.

Gegenstand der Erfindung sind also Mischungen aus

A) 20 bis 80 Gew.-%, vorzugsweise 40 bis 75 Gew.-%, thermoplastischem Polyester,

B) 5 bis 50 Gew.-%, vorzugsweise 20 bis 50 Gew.-%, mineralischem Füllstoff,

C) 0 bis 30 Gew.-%, vorzugsweise 0 oder 10 bis 25 Gew.-%, eines Acrylat- oder Butadienkautschuks,

D) 0 bis 30 Gew.-% Glasfasern und

E) 0 bis 10 Gew.-% üblicher Hilfsstoffe,

wobei sich die Prozentangaben auf die Summe der Komponenten A bis E beziehen,

dadurch gekennzeichnet, daß der Füllstoff B ein gemahlener Quarz und/oder ein gemahlener Cristobalit ist, wovon mindestens 50 Gew.-% einen Teilchendurchmesser von höchstens 2,5 µm besitzen.

Thermoplastische Polyester A im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen, araliphatischen oder aromatischen Diolen.

Bevorzugte Polyester A lassen sich aus Terephthalsäure (oder ihren reaktionsfähigen Derivaten) und Alkandiolen

mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate A können neben Terephthalsäureresten bis zu 20 Mol-% Reste anderer aromatischer oder cycloaliphatischer Dicarbonsäuren mit 8 bis 14 C-Atomen und/oder aliphatischer Dicarbonsäuren mit 4 bis 12 C-Atomen enthalten, wie z.B. Reste von Phthalsäure, Isophthalsäure, Naphthalin-2,6-dicarbonsäure, Diphenyl-4,4'-dicarbonsäure, Bernstein-, Adipin-, Sebacinsäure, Cyclohexandiessigsäure.

Die bevorzugten Polyalkylenterephthalate A können neben Ethylenglykol- bzw. Butandiol-1,4-resten bis zu 20 Mol-% anderer aliphatischer Diole mit 3 bis 21 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 24 07 674, 24 07 776, 27 15 932).

Die Polyalkylenterephthalate A können durch Einbau relativ kleiner Mengen 3- oder 4-wertiger Alkohole oder 3- oder 4-basischer Carbonsäuren, wie sie z.B. in der DE-OS 19 00 270 und der US-PS 36 92 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate A, die allein aus Terephthalsäure oder deren reaktionsfähigen Derivaten (z.B. deren Dialkylestern) und Ethylenglykol oder Butandiol-1,4 hergestellt worden sind.

Die als Komponente A vorzugsweise verwendeten Polyethylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, und die als Komponente A verwendeten Polybutylenterephthalate besitzen im allgemeinen eine Intrinsic-Viskosität von 0,7 bis 1,6 dl/g, vorzugsweise 0,8 bis 1,3 dl/g, insbesondere 0,8 bis 1,05 dl/g, jeweils gemessen in Phenol/o-Dichlorbenzol (1:1 Gewichtsteile) bei 25°C.

Will man als Polyesterkomponente A Polyethylenterephthalat/Polybutylenterephthalat-Mischungen einsetzen, so wählt man vorzugsweise Polyethylenterephthalate mit einer Intrinsic-Viskosität von 0,65 bis 0,9 dl/g und Polybutylenterephthalate mit einer Intrinsic-Viskosität von 0,8 bis 1,4 dl/g und Polyethylenterephthalat/Polybutylenterephthalat-Mischungsverhältnisse von 90:10 bis 10:90, vorzugsweise von 30:70 bis 90:10 (bezogen auf Gewicht). Anstelle von Polyestermischungen lassen sich mit dem gleichen Erfolg auch die entsprechenden Copolyester einsetzen.

Im Zusammenhang mit dem gemahlenen Quarz B bedeutet "Quarz" nicht allgemein Siliciumdioxid; erfindungsgemäß werden mit "Quarz" gemäß der Bedeutung im engeren Sinne die beiden kristallinen Siliciumdioxid-Modifikationen α- und β-Quarz - nicht aber glasige oder amorphe, also nicht kristalline, Materialien - bezeichnet.

Die hochfeinen Produkte B erhält man durch Mahlen von gereinigten, gegebenenfalls thermisch umgewandelten, Quarz- und Cristobalitsanden, z.B. in Rohrmühlen, und anschließende Teilchengrößen-Fraktionierung, z.B. über Windsichter. Der gemahlene Quarz bzw. Cristobalit besteht zu mindestens 99 Gew.-%, vorzugsweise zu mindestens 99,5 Gew.-%, aus Siliciumdioxid. Er ist - im Gegensatz zu Novaculit - scharfkantig und splitterförmig. Mineralogisch gesehen, gehört er zu den kristallinen Siliciumdioxid-Modifikationen, nicht zu den kryptokristallinen, wie z.B. Flint, Novaculit und verschiedene Schmucksteine, vgl. z.B. Ullmanns Encyclopädie der technischen Chemie <u>21</u> (4. Aufl.), 440, Verlag Chemie, Weinheim 1982.

Ein weiteres Unterscheidungsmerkmal zwischen Quarz und Novaculit ist die bei Quarz etwa doppelt so hohe Packungsdichte (siehe hierzu Katz u. Milewski, Handbook of Fillers and Reinforcements for Plastics, van Nostrand 1978, S. 144-154). Der erfindungsgemäß zu verwendende Quarz besitzt vorzugsweise eine Packungsdichte von mindestens 2,4 $kg/dm^3$.

Der gemahlene Quarz bzw. Crystobalit B kann geschlichtet oder ungeschlichtet eingesetzt werden; Schlichte führt zu etwas höheren Zähigkeiten. Bevorzugte Schlichten sind Silane der Formel

$$X_a - \underset{\displaystyle Y_b}{\underset{|}{Si}} (R-Z)_c$$

worin

X eine hydrolysierbare Gruppe, vorzugsweise $C_1$-$C_4$-Alkoxy oder ein H-Atom,

Y ein Wasserstoffatom oder einen einwertigen $C_1$-$C_6$-Kohlenwasserstoffrest, vorzugsweise Vinyl oder Phenyl,

R einen zweiwertigen $C_1$-$C_{20}$-Kohlenwasserstoffrest, vorzugsweise Propylen,

Z eine funktionelle Gruppe, vorzugsweise Amino, Glycidoxy, (Meth-)Acryloyl,

a,c eine ganze Zahl von 1 bis 3,

b Null, 1 oder 2,

a + b + c = 4

bedeuten.

Vorzugsweise sind a = 3, b = 0 und c = 1.

Als Schlichte bevorzugte Silane sind z.B.

δ-Aminopropyltriethoxysilan,
δ-Aminopropylphenyldimethoxysilan,
δ-Aminopropyltrimethoxysilan,
δ-Glycidoxypropyltrimethoxysilan,
δ-Methacryloxypropyltrimethoxysilan,
δ-Vinyltrimethoxysilan.

Zwar kann man die Schlichte direkt beim Mischen der Komponenten A bis E zusetzen, jedoch ist es bevorzugt, sie während oder nach dem Mahlen auf die Quarz- bzw. Cristobalitoberfläche aufzubringen.

Als Komponente C zu verwendende Acrylat- und Butadienkautschuke werden in der Literatur beschrieben; vgl. z.B. DE-OS 16 94 173, 22 48 242, 23 10 034, 23 57 406, DE-PS 24 44 584 = US-PS 40 22 748, DE-OS 27 26 256 = US-PS 40 96 202, US-PS 38 08 180, EP-A 56 243.

Bevorzugte Kautschuke C besitzen eine Glasübergangstemperatur von unter -30° C und umfassen Copolymerisate - insbesondere Pfropfcopolymerisate - mit kautschukelastischen Eigenschaften, die im wesentlichen aus mindestens 2 der folgenden Monomeren erhältlich sind: Butadien-1,3, Styrol, Acrylnitril und (Meth)-Acrylsäureester mit 1 bis 18 C-Atomen in der Alkoholkomponente; also Polymerisate, wie sie z.B. in "Methoden der Organischen Chemie" (Houben-Weyl),

Bd. 14/1, Georg Thieme Verlag, Stuttgart 1961, S. 393-406 und in C.B. Bucknall, "Toughened Plastics", Appl. Science Publishers, London 1977, beschrieben sind.

Besonders bevorzugte Polymerisate C sind Pfropfpolymerisate.

Bevorzugte Pfropfpolymerisate C besitzen mittlere Teilchendurchmesser $d_{50}$ von 0,05 bis 1, vorzugsweise von 0,1 bis 0,8, insbesondere von 0,2 bis 0,6 µm.

Der mittlere Teilchendurchmesser $d_{50}$ ist der Durchmesser, oberhalb und unterhalb dessen jeweils 50 Gew.-% der Teilchen liegen. Er kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) bestimmt werden.

Die Pfropfpolymerisate C sind vernetzt und haben Gelgehalte von mindestens 50 Gew.-%, vorzugsweise mindestens 80 Gew.-% und insbesondere von mindestens 90 Gew.-%, bezogen auf Pfropfpolymerisat C.

Der Gelgehalt der vernetzten Dienkautschuke wird bei 25° C in Toluol, der Gelgehalt der vernetzten Acrylatkautschuke bei 25° C in Dimethylformamid bestimmt (M. Hoffmann, H. Krömer, R. Kuhn, Polymeranalytik I und II, Georg Thieme Verlag Stuttgart 1977).

Bevorzugte Pfropfpolymerisate C sind Pfropfpolymerisate von 15 bis 60, vorzugsweise 20 bis 50, insbesondere 25 bis 40 Gew.-% wenigstens eines Vinyl- oder Vinylidenmonomeren

aus der Reihe Styrol, α-Methylstyrol, Acrylnitril, $C_1$-$C_8$-Alkylacrylat, $C_1$-$C_8$-Alkylmethacrylat, Hydroxy-$C_2$-$C_8$-alkyl-(meth)acrylat, Epoxy-$C_2$-$C_8$-alkyl(meth)acrylat auf 40 bis 85, vorzugsweise 50 bis 80, insbesondere 60 bis 75 Gew.-% teilchenförmigem vernetztem Dien- oder Acrylatkautschuk, jeweils bezogen auf Pfropfpolymerisat C.

Bevorzugte Pfropfmonomere sind Methylmethacrylat sowie Mischungen aus Styrol und Methylmethacrylat und Mischungen aus Styrol und Acrylnitril.

Bevorzugte Dienkautschuke sind vernetzte Homo- und/oder Copolymerisate aus konjugierten $C_4$-$C_6$-Dienen. Bevorzugtes Dien ist Butandien-1,3. Die Diencopolymerisate können neben den Dienresten bis zu 30 Gew.-%, bezogen auf Diencopolymerisat, Reste anderer ethylenisch ungesättigter Monomerer, wie z.B. Styrol, Acrylnitril, Ester der Acryl- oder Methacrylsäure mit einwertigen $C_1$-$C_4$-Alkoholen, wie z.B. Methylacrylat, Ethylacrylat, Methylmethacrylat, Ethylmethacrylat, enthalten.

Die Herstellung der Dienkautschuk-Pfropfgrundlage und der daraus hergestellten Pfropfpolymerisate wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage Bd. 19, Verlag Chemie, Weinheim, 1981, S. 279 bis 284, beschrieben.

Bevorzugte Pfropfgrundlagen auf Basis Acrylatkautschuk sind Polymerisate, die durch Polymerisation von $C_1$-$C_8$-

Alkylacrylaten erhalten werden. Die Polymerisate können auch Copolymerisate der Acrylsäureester mit bis zu 40 Gew.-%, bezogen auf Copolymerisat, anderer Vinylmonomerer, wie Styrol, Acrylnitril, Methylmethacrylat, Vinylester, Vinylether, sein.

Die Acrylatkautschuke sind vernetzt.

Bevorzugte Beispiele für vernetzende Monomere mit mehr als einer copolymerisierbaren Doppelbindung sind Ester ungesättigter $C_3$-$C_{12}$-Monocarbonsäuren und ungesättigter einwertiger $C_2$-$C_{12}$-Alkohole oder gesättigter $C_2$-$C_{20}$-Polyole mit 2 bis 4 OH-Gruppen, wie z.B. mehrfach ungesättigte heterocyclische Verbindungen, wie Trivinyl-, Triallylcyanurat und -isocyanurat; insbesondere Triallylcyanurat; polyfunktionelle Vinylverbindungen, wie Di- und Trivinylbenzole; aber auch Triallylphosphat.

Bevorzugte vernetzende Monomere sind Allylmethacrylat, Ethylenglykoldimethacrylat, Diallylphthalat und heterocyclische Verbindungen, die mindestens drei copolymerisierbare ethylenisch ungesättigte Doppelbindungen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Kautschuk-Pfropfgrundlage.

Bei cyclischen, vernetzenden Monomeren mit mindestens drei ethylenisch ungesättigten Doppelbindungen ist es vorteilhaft, nicht mehr als 1 Gew.-%, bezogen auf Kautschuk-Pfropfgrundlage, zu verwenden.

Die erfindungsgemäßen Mischungen können Glasfasern D enthalten. Dadurch wird die Kerbschlagzähigkeit erhöht; mit zunehmendem Glasfasergehalt können aber die spezifischen Vorteile mineralgefüllter Polyester, wie Oberflächenglanz und Verzugsarmut, etwas in den Hintergrund treten.

Beispiele für übliche Hilfsstoffe E sind Nukleier- und Entformungsmittel, Stabilisatoren gegen thermischen und UV-Abbau, Pigmente, Farbstoffe etc.

Das Mischen der Komponenten kann auf üblichen Kunststoff verarbeitenden Aggregaten, wie Knetern oder Schneckenextrudern, durchgeführt werden. Die Mischbedingungen wird man so wählen, daß die Viskosität der polymeren Komponenten nicht oder kaum abfällt. Selbstverständlich sind auch Vorgemische der einzelnen Komponenten zu verwenden.

Weiterer Gegenstand der Erfindung ist also ein Verfahren zur Herstellung der erfindungsgemäßen Mischungen durch Mischen der Komponenten, vorzugsweise bei Temperaturen von 250 bis 320°C.

Die Herstellung von Formkörpern mittels Spritzguß ist bekannt (z.B. E.J. Rubin, Injection Molding Theory and Practice, Wiley Interscience, 1972); geeignete Massetemperaturen liegen bei 250 bis 270° C, bevorzugte Werkzeugtemperaturen bei 80 bis 130° C.

Weiterer Gegenstand ist also die Verwendung der erfindungsgemäßen Mischungen zur Herstellung von Formkörpern, vorzugsweise durch Spritzguß.

Aus den erfindungsgemäßen Mischungen lassen sich die verschiedensten Gegenstände herstellen, z.B. Vergaserteile, Zündverteiler, Elektrobauteile, Gehäuseteile, Lüftungsgitter, Lampenfassungen.

Beispiele und Vergleichsversuche

Ein Polybutylenterephthalat mit einer Intrinsic-Viskosität von 0,93 dl/g und ein Polyethylenterephthalat mit einer Intrinsic-Viskosität von 0,77 dl/g wurden im Gewichtsverhältnis 60:40 vermischt und bei der Compoundierung auf einem Doppelwellenextruder mit kleinen Mengen Stabilisator, Trennmittel und Kristallisationsbeschleuniger sowie den in Tabelle 1 und 2 angegebenen Mengen verschiedener anorganischer Zuschlagsstoffe versetzt. Zusätzlich sind die Prüfdaten aus den Formmassen hergestellter Probekörper angeführt. Hieraus wird die Überlegenheit der Systeme mit gemahlenem Quarz und Cristobalit ersichtlich.

Tabelle 1

| Beisp. | Mineralart | Menge (Gew.-%, bez. auf Gesamtmischung) | Schlagzähigkeit (DIN 53453) [kJ/m²] | Kerbschlagzähigkeit (DIN 53453) [kJ/m²] | Zug-E-Modul (DIN 53455) [MPa] | Vicat B (DIN 53460) [°C] | Biege-E-Modul (DIN 53452) [MPa] |
|---|---|---|---|---|---|---|---|
| 1 | unbeschlichtetes Quarzmehl, Teilchendurchmesser: ≥50 % sind <2,5 µm | 20 | >100 | 1,6 | 3810 | 171 | 3440 |
| 2 | | 40 | 83 | 1,6 | 5650 | 193 | 4860 |
| 3 | mit Epoxisilan beschlichtetes Quarzmehl; Teilchendurchmesser: ≥70 % sind <2,5 µm | 40 | >100 | 1,6 | 5710 | 191 | 4900 |
| 4 | mit Aminosilan beschlichtetes Quarzmehl; Teilchendurchmesser: ≥70 % sind <2,5 µm | 40 | 92 | 1,6 | 5770 | 193 | 5050 |
| 5 | mit Epoxisilan beschlichtetes Cristobalitmehl; Teilchendurchmesser: ≤65 % sind <2,5 µm | 40 | 90 | 1,6 | 5900 | 191 | 5180 |

Tabelle 2

| Vergl. Versuch | Mineralart | Menge (Gew.-%, bez. auf Gesamtmischung) | Schlagzähigkeit (DIN 53453) [kJ/m²] | Kerbschlagzähigkeit (DIN 53453) [kJ/m²] | Zug-E-Modul (DIN 53455) [MPa] | Vicat B (DIN 53460) [°C] | Biege-E-Modul (DIN 53452) [MPa] |
|---|---|---|---|---|---|---|---|
| a | Aminosilan-behandeltes calciniertes Kaolin Teilchengröße: 50 % ≤2 µm | 20 | 91 | 1,5 | 3960 | 182 | 3560 |
| b | | 40 | 33 | 1,5 | 6630 | 198 | 5800 |
| c | Epoxisilan-behandelter Wollastonit, Teilchengröße: 63 % ≤2,5 µm | 40 | 41 | 1,6 | 5870 | 186 | 5190 |
| d | unbehandeltes Talkum Teilchengröße; 69 % ≤2 µm | 40 | 14 | 1,8 | 8880 | 191 | 8690 |
| e | unbehandeltes Novaculit Teilchengröße: 80 % <5 µm Durchschnittl.TG: 2,7µm | 30 | 15 | 6,1 | 4890 | 178 | 4240 |
| f | unbehandeltes Novaculit Teilchengröße: 100 % <5 µm Durchschnittl.TG: 2,7µm | 30 | 61 | 2,3 | 5010 | 183 | 4240 |

Patentansprüche:

1. Mischungen aus

A) 20 bis 80 Gew.-% thermoplastischem Polyester,

B) 5 bis 50 Gew.-% mineralischem Füllstoff,

C) 0 bis 30 Gew.-% eines Acrylat- oder Butadienkautschuks,

D) 0 bis 30 Gew.-% Glasfasern und

E) 0 bis 10 Gew.-% üblicher Hilfsstoffe,

wobei sich die Prozentangaben auf die Summe der Komponenten A bis E beziehen,

dadurch gekennzeichnet, daß der Füllstoff B ein gemahlenes Quarz und/oder ein gemahlener Cristobalit ist, wovon mindestens 50 Gew.-% einen Teilchendurchmesser von höchstens 2,5 µm besitzen.

2. Mischungen nach Anspruch 1, dadurch gekennzeichnet, daß sie 40 bis 75 Gew.-% Komponente A enthalten.

3. Mischungen nach Ansprüchen 1 und 2, dadurch gekennzeichnet, daß sie 20 bis 50 Gew.-% Komponente A enthalten.

4. Mischungen nach Ansprüchen 1-3, dadurch gekennzeichnet, daß sie 10 bis 25 Gew.-% Komponente C enthalten.

5. Mischungen nach Ansprüchen 1-4, dadurch gekennzeichnet, daß der thermoplastische Polyester aus der Reihe Polyethylenterephthalat, Polybutylenterephthalat, deren Mischungen und Poly(ethylen/butylenterephthalat) ausgewählt ist.

6. Verfahren zur Herstellung der Mischungen nach Ansprüchen 1 bis 5 durch Mischen der Komponenten bei Temperaturen von 250 bis 320°C.

7. Verwendung der Mischungen nach Ansprüchen 1-5 zur Herstellung von Formkörpern.

**0221338**

Europäisches Patentamt

# EUROPÄISCHER RECHERCHENBERICHT

Nummer der Anmeldung

EP 86 11 3390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | US-A-4 018 738 (H.L.RAWLINGS) * Patentansprüche 1-12; Spalte 3, Zeilen 7-40 * | 1-7 | C 08 L 67/02<br>C 08 K 3/36 |
| X | CHEMICAL ABSTRACTS, Band 85, nr. 18, November 1976, Seite 55, Zusammenfassung nr. 125139p, Columbus, Ohio, US; & JP-A-76 81 849 (TEIJIN) 17. Juli 1976 * Insgesamt * | 1-7 | |
| A | PATENTS ABSTRACTS OF JAPAN, Band 7, nr. 108 (C-165)[1253], 11. Mai 1983; & JP-A-58 29 858 (NITTO DENKI) 22-02-1983 | 1 | |
| A | GUMMI, ASBEST, KUNSTSTOFFE, Band 36, nr. 12, Dezember 1983, Seiten 658-667, A.W.Guntner Verlag, Stuttgart, DE; D.SKUDELNY et al.: "Mineralische FÜllstoffe aus Quarz, Cristobalit und Quarzgut" * Seite 658, Absatz 3.3; Seite 663, Absatz 4 - Seite 664 * | 1 | **RECHERCHIERTE SACHGEBIETE (Int. Cl.4)**<br>C 08 L<br>C 08 K |
| D,A | EP-A-0 056 243 (BAYER) * Patentansprüche 1-12; Seite 7, Zeilen 1-8 * | 1-7 | |

Der vorliegende Recherchenbericht wurde für alle Patentansprüche erstellt.

| Recherchenort | Abschlußdatum der Recherche | Prüfer |
|---|---|---|
| DEN HAAG | 15-01-1987 | DECOCKER L. |

KATEGORIE DER GENANNTEN DOKUMENTE

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument